# FASCICULE DE BREVET EUROPEEN

(11) **EP 3 849 884 B1**
(45) Date de publication et mention de la délivrance du brevet: **25.09.2024**
(21) Numéro de dépôt: 19779532.1
(22) Date de dépôt: 28.08.2019
(51) Int. Cl.: B62D 35/02, B60R 19/18

(54) **BOUCLIER DE PARE-CHOCS FACILITANT LE MONTAGE D'UN DEFLECTEUR D'AIR SUR UN VEHICULE AUTOMOBILE**
STOSSFÄNGERSCHILD ZUR ERLEICHTERUNG DER MONTAGE EINES LUFTABLENKERS AN EINEM KRAFTFAHRZEUG
BUMPER SHIELD FACILITATING THE ASSEMBLY OF AN AIR DEFLECTOR ON A MOTOR VEHICLE

(30) Priorité: 11.09.2018 FR 1858112
(43) Date de publication de la demande: 21.07.2021
(73) Titulaire: Stellantis Auto SAS, 78300 Poissy (FR)
(72) Inventeur: BERTH, Stéphane, 92320 CHATILLON (FR)
(86) Numéro de dépôt international: PCT/FR2019/051978
(87) Numéro de publication internationale: WO 2020/053499

(56) Documents cités:
- EP-A1- 3 833 578
- DE-A1- 102014 111 525
- FR-A1- 2 987 806
- US-A- 6 070 933

## Description

L'invention a trait au domaine d'un bouclier de pare-chocs arrière d'un véhicule automobiles, plus particulièrement à l'assemblage d'une partie du boucliers de pare-chocs arrière sur le véhicule automobile.

Un véhicule automobile comprend classiquement, à l'arrière, un bouclier de pare-chocs prolongé à l'avant par un panneau déflecteur d'air. Ce panneau est rattaché à un plancher arrière de charge du véhicule, et a vocation à améliorer l'aérodynamisme du véhicule, lors de son déplacement. Mais le montage de ce panneau nécessite tout d'abord l'installation du bouclier de pare-chocs sur le véhicule, préalablement à la fixation provisoire entre l'avant du panneau et le plancher arrière de charge. Ainsi, dans la zone de fixation entre le bouclier de pare-chocs et l'arrière du panneau, le panneau déflecteur est libre, et baille en se décalant par rapport à la portion inférieure du bouclier. Ce décalage rend difficile la fixation du panneau sur le bouclier.

Le document de brevet publié US 5,580,109 divulgue un assemblage de pare-chocs esthétiquement acceptable et réalisé afin d'être assemblé avec un minimum d'efforts et d'outils. Ainsi, le bouclier comprend, à son extrémité supérieure, des languettes qui s'insèrent dans un support monté sur le véhicule, et qui ne servent qu'au montage du bouclier sur le support. De plus, aucun panneau déflecteur n'est mentionné dans cette demande.

Le document de brevet publié FR 2 981 905 A1 divulgue un bouclier de véhicule automobile intégrant un panneau déflecteur d'air. Le bouclier et le panneau déflecteur sont fabriqués d'un seul tenant afin de diminuer les coûts et de faciliter le montage. Mais cette structure, du fait de la complexité de l'ensemble bouclier et panneau, est difficile à fabriquer.

Le document de brevet publié FR 3 008 373 A1 divulgue un procédé de montage d'une face avant de véhicule automobile. Ce procédé permet de limiter les déformations subies par le panneau déflecteur lors de son montage et d'améliorer le temps de montage dudit panneau. Ce procédé introduit une fixation provisoire du panneau, réalisée grâce à des moyens de maintien, qui sont ensuite enlevés lors du montage définitif du panneau. Mais un oubli de ces pièces peut être gênant lors de l'utilisation du véhicule, et induisent également une perte de temps lors de leur mise en place.

L'invention a pour objectif de pallier au moins un des inconvénients de l'état de la technique susmentionné. Plus particulièrement, l'invention a pour objectif de faciliter le montage du déflecteur arrière sur le véhicule automobile.

L'invention a pour objet un bouclier de pare-chocs arrière d'un véhicule automobile conformément à l'objet de la revendication 1.

Selon un mode avantageux de l'invention, lorsque le bouclier est en position de montage sur véhicule, les languettes s'étendent vers l'avant depuis le bord inférieur et les pattes s'étendent verticalement vers le bas depuis ledit bord.

La présente invention concerne aussi un véhicule automobile qui comprend un tel bouclier de pare-chocs arrière et un panneau déflecteur d'air conformément à l'objet de la revendication 3.

Selon un mode avantageux de réalisation du véhicule selon l'invention, chacune des languettes s'étend suivant une direction principale transversale le long du bord inférieur du bouclier de pare-chocs arrière.

Selon un mode avantageux de réalisation du véhicule selon l'invention, le bouclier de pare-chocs arrière est une paroi en forme de coque, ladite paroi comprend une portion inférieure s'étendant horizontalement et formant le bord inférieur, chacune des languettes étant coplanaire avec ladite portion inférieure.

Selon un mode avantageux de réalisation du véhicule selon l'invention, le panneau déflecteur d'air est une paroi en forme de coque, ladite paroi comprenant une portion principale formant le bord arrière, une portion avant à une hauteur différente de la portion principale, et une portion intermédiaire courbée reliant les portions principale et avant.

Selon un mode avantageux de réalisation du véhicule selon l'invention, la portion avant de la paroi du panneau déflecteur d'air est fixée contre le plancher arrière de charge.

Selon un mode avantageux de réalisation du véhicule selon l'invention, la portion avant de la paroi du panneau déflecteur d'air est pourvue de moyens de fixation aptes à assurer une fixation provisoire lors d'un engagement desdits moyens avec des moyens correspondant sur le plancher arrière de charge.

L'invention a également pour objet un procédé de montage d'un panneau déflecteur d'air sous un plancher arrière de charge du véhicule, comprenant les étapes suivantes : (a) montage d'un bouclier de pare-chocs arrière ; (b) mise en place du panneau déflecteur d'air sous le plancher arrière de charge ; et (c) fixation dudit panneau audit plancher et audit bouclier ; remarquable en ce que le bouclier de pare-chocs arrière est selon l'invention ; et l'étape (b) comprend un engagement d'un bord arrière du panneau déflecteur d'air avec les languettes dudit bouclier, suivi d'une fixation provisoire de la portion avant dudit panneau au plancher arrière de charge.

Les mesures de l'invention sont intéressantes en ce qu'elles permettent un montage facilité du panneau déflecteur d'air arrière sur le véhicule automobile, en diminuant également le temps de montage dudit déflecteur. Cela permet de diminuer les coûts de production du véhicule. La présence d'un déflecteur sur le véhicule permet d'améliorer l'aérodynamisme du véhicule, ainsi que sa consommation en carburant. Le bouclier de pare-chocs protège le véhicule et en améliore l'esthétisme.

D'autres caractéristiques et avantages de la présente invention seront mieux compris à l'aide de la description et des dessins parmi lesquels :
- La figure 1 est une vue en perspective du dessous d'une partie arrière de véhicule automobile selon l'invention ;
- La figure 2 est une vue en coupe de la zone de fixation entre un bouclier de pare-chocs et un panneau déflecteur d'air telle que montrée à la figure 1 ;
- La figure 3 reprend les différentes étapes du procédé de montage du panneau déflecteur selon l'invention.

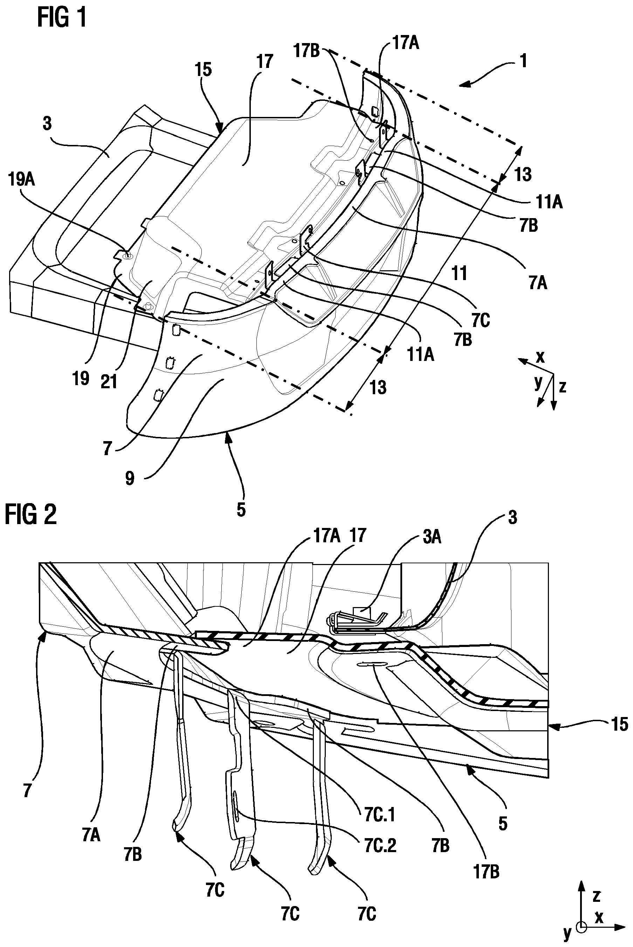

Les figures 1 et 2 montrent une partie de l'arrière d'un véhicule automobile selon l'invention. À la figure 1, la structure est représentée avec la partie inférieure du véhicule 1 positionnée vers le haut.

On définit alors en référence au véhicule :
- une direction longitudinale (axe X) correspondant à la direction de déplacement du véhicule 1,
- une direction transversale (axe Y), perpendiculaire à la direction du déplacement du véhicule 1 et horizontale,
- une direction verticale (axe Z) perpendiculaire au plan (XY).

Plus particulièrement, un plancher arrière de charge 3 est prolongé à l'arrière par un bouclier de pare-chocs arrière 5. Un panneau déflecteur d'air 15 est également positionné sous le plancher arrière de charge 3 et à l'avant du bouclier de pare-chocs arrière 5.

Le bouclier de pare-chocs 5 est composé d'une paroi en forme de coque. La paroi peut être scindée de plusieurs façons. Suivant l'axe x, la division du bouclier 5 forme une portion inférieure 7 qui s'étend horizontalement dans la partie basse du bouclier 5, et une portion supérieure 9 qui s'étend au-dessus de la portion inférieure 7. La portion inférieure 7 du bouclier 5 forme plus spécifiquement un bord inférieur 7A. Ce bord présente deux languettes horizontales 7B.

Les languettes 7B sont préférentiellement coplanaires à la portion inférieure 7 du bouclier de pare-chocs arrière 5, et s'étendent suivant une direction principale transversale et vers l'avant du véhicule 1, le long du bord inférieur 7A du bouclier 5. Ces languettes 7B sont au moins au nombre de deux par bouclier 5.

La scission de la paroi du bouclier 5 suivant l'axe y, permet une division du bouclier 5 en une portion médiane 11 et deux portions latérales recourbées 13. La portion médiane 11 comprend deux portions d'extrémités latérales 11A permettant la liaison avec les portions latérales recourbées 13. Ce sont sur ces portions d'extrémités latérales 11A que sont préférentiellement positionnées les languettes horizontales 7B. Chaque languette 7B présente en outre une longueur supérieure ou égale à 5%, et/ou inférieure ou égale à 20% de la longueur totale de la portion médiane 11 du bouclier 5, cette portion médiane 11 étant d'une longueur totale d'au moins 40%, préférentiellement 50% de la longueur totale du bouclier 5.

Le bouclier de pare-chocs arrière 5 comprend, en outre, sur son bord inférieur 7A, des moyens de fixation 7C au panneau déflecteur d'air arrière 15. Ces moyens de fixation 7C sont préférentiellement des pattes 7C qui s'étendent verticalement vers le bas depuis le bord inférieur 7A du bouclier 5, lorsque le bouclier 5 est en position de montage sur le véhicule 1. Chacune de ces pattes 7C comprend un film charnière 7C.1, positionné à proximité de la jonction entre la patte 7C et le bord inférieur 7A du bouclier 5. Le film-charnière 7C.1 permet le pivotement puis le rabattement de la patte 7C contre le panneau déflecteur d'air 15. La fixation du bouclier 5 au panneau 15 est réalisée grâce à la présence d'un orifice de fixation 7C.2 sur l'extrémité de la patte 7C, orifice 7C.2 dans lequel est monté un élément de fixation connu de l'homme du métier, tel qu'une vis (non montrée sur ces figures). Cette fixation est également réalisée au plancher arrière de charge 3 par le biais de moyens de fixation 3A (visibles à la figure 2), ces orifices 3A étant préférentiellement des écrous. Les pattes 7C sont préférentiellement au nombre de quatre par bouclier 5, et positionnée de chaque côté de chaque languette 7B.

Le panneau déflecteur d'air 15 selon l'invention est une paroi en forme de coque. Le panneau 15 comprend une portion principale 17 formant un bord arrière 17A rattaché au bord inférieur 7A du bouclier 5. Le panneau 15 comprend, en outre, une portion avant 19 située à une hauteur différente de la portion principale 17, ainsi qu'une portion intermédiaire 21 courbée reliant les portions principale 17 et avant 19. Le bord arrière 17A du panneau 15 comprend des orifices de fixation 17B qui vont permettre la fixation du panneau 15 au bouclier de pare-chocs arrière 5, par le biais des pattes 7C. La portion avant 19 du panneau 15 est pourvue de moyens de fixation 19A, préférentiellement des écrous, pour permettre la fixation provisoire du panneau 15 sur le plancher arrière de charge 3, lors d'un engagement des moyens 19A avec des moyens de fixation correspondant sur le plancher arrière de charge 3. Ces moyens de fixation sont préférentiellement des goujons.

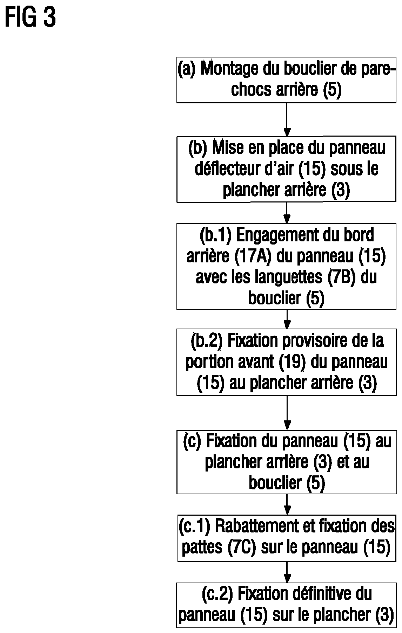

La figure 3 reprend les différentes étapes du procédé, en relation avec les figures 1 et 2.

Une première étape (a) consiste à monter le bouclier de pare-chocs arrière 5 sur le plancher arrière de charge 3 du véhicule 1. La fixation du bouclier 5 est réalisée dans la portion supérieure 9 dudit bouclier 5. Cette fixation est réalisée par des méthodes connues de l'homme du métier.

Une seconde étape (b) consiste à mettre en place le panneau déflecteur d'air 15 sous le plancher arrière de charge 3. Dans une première sous étape (b.1), il y a engagement du bord arrière 17A du panneau déflecteur d'air 15 avec les languettes 7B du bouclier 5. Les languettes 7B ont la particularité de servir de support au bord arrière 17A du panneau déflecteur d'air 15 lors du montage dudit panneau 15. Ainsi, le bouclier 5 est fixé provisoirement à l'arrière ce qui permet d'éviter le déplacement du panneau 15 par rapport au bouclier 5. Dans une seconde sous étape (b.2), il y a fixation provisoire de la portion avant 19 du panneau déflecteur d'air 15 au plancher arrière 3.

Une troisième étape (c) consiste à fixer le panneau déflecteur d'air 15 au plancher arrière 3 et au bouclier 5. Cette étape comprend une première sous étape (c.1) de rabattement, grâce au film charnière 7C.1, puis de fixation des pattes de fixation 7C sur le panneau 15. Une seconde sous étape (c.2) consiste à fixer définitivement le panneau 15 sur le plancher arrière 3, par le biais des moyens de fixation 19A.

## Revendications

1. Bouclier de pare-chocs arrière (5) pour véhicule automobile (1), comprenant une paroi en forme de coque, ladite paroi présentant un bord inférieur (7A) avec des moyens de fixation (7C) à un bord arrière (17A) d'un panneau déflecteur d'air (15) destiné à être disposé sous un plancher arrière de charge (3) du véhicule (1) ; la paroi présente, au bord inférieur (7A), au moins deux languettes horizontales (7B), lorsque le bouclier (5) est en position de montage sur véhicule (1), configurées pour servir de support au bord arrière (17A) du panneau déflecteur d'air (15) lors du montage dudit déflecteur (15), avant engagement des moyens de fixation (7C) avec ledit panneau (15), **caractérisé en ce que** les moyens de fixation (7C) sont des pattes (7C) s'étendant verticalement vers le bas lorsque ledit bouclier (5) est en position de montage sur véhicule (1), et configurées pour être pivotées et rabattues contre le panneau déflecteur d'air (15).

2. Bouclier de pare-chocs arrière (5) selon la revendication 1, **caractérisé en ce que**, lorsque le bouclier (5) est en position de montage sur véhicule (1), les languettes (7B) s'étendent vers l'avant depuis le bord inférieur (7A) et les pattes (7C) s'étendent verticalement vers le bas depuis ledit bord (7A).

3. Véhicule automobile (1) comprenant :
- un bouclier de pare-chocs arrière (5) selon la revendication 1 ou 2; et
- un panneau déflecteur d'air (15) disposé sous un plancher arrière de charge (3) du véhicule (1), avec un bord arrière (17A) attaché à un bord inférieur (7A) du bouclier de pare-chocs arrière (5).

4. Véhicule automobile (1) selon la revendication 3, **caractérisé en ce que** chacune des languettes (7B) s'étend suivant une direction principale transversale le long du bord inférieur (7A) du bouclier de pare-chocs arrière (5).

5. Véhicule automobile (1) selon l'une des revendications 3 et 4, **caractérisé en ce que** le bouclier de pare-chocs arrière (5) est une paroi en forme de coque, ladite paroi comprend une portion inférieure (7) s'étendant horizontalement et formant le bord inférieur (7A), chacune des languettes (7B) étant coplanaire avec ladite portion inférieure (7).

6. Véhicule automobile (1) selon l'une des revendications 3 à 5, **caractérisé en ce que** le panneau déflecteur d'air (15) est une paroi en forme de coque, ladite paroi comprenant une portion principale (17) formant le bord arrière (17A), une portion avant (19) à une hauteur différente de la portion principale (17), et une portion intermédiaire (21) courbée reliant les portions principale (17) et avant (19).

7. Véhicule automobile (1) selon la revendication 6, **caractérisé en ce que** la portion avant (19) de la paroi du panneau déflecteur d'air (15) est fixée contre le plancher arrière de charge (3).

8. Véhicule automobile (1) selon l'une des revendications 6 et 7, **caractérisé en ce que** la portion avant (19) de la paroi du panneau déflecteur d'air (15) est pourvue de moyens de fixation (19A) aptes à assurer une fixation provisoire lors d'un engagement desdits moyens (19A) avec des moyens correspondant sur le plancher arrière de charge (3).

9. Procédé de montage d'un panneau déflecteur d'air (15) sous un plancher arrière de charge (3) du véhicule (1), comprenant les étapes suivantes :
(a) montage d'un bouclier de pare-chocs arrière (5) ;
(b) mise en place du panneau déflecteur d'air (15) sous le plancher arrière de charge (3) ; et
(c) fixation dudit panneau (15) audit plancher (3) et audit bouclier (5) ; **caractérisé en ce que**
le bouclier de pare-chocs arrière (5) est selon l'une des revendications 1 ou 2 ; et
l'étape (b) comprend un engagement d'un bord arrière (17A) du panneau déflecteur d'air (15) avec les languettes (7B) dudit bouclier (5), suivi d'une fixation provisoire de la portion avant (19) dudit panneau (15) au plancher arrière de charge (3).

## Patentansprüche

1. Hinterer Stoßfänger (5) für ein Kraftfahrzeug (1) mit einer schalenförmigen Wand, wobei die Wand eine untere Kante (7A) mit Befestigungsmitteln (7C) an einer hinteren Kante (17A) einer Luftablenkplatte (15) aufweist, die unter einem hinteren Lastboden (3) des Fahrzeugs (1) angeordnet werden soll; wobei die Wand an der unteren Kante (7A) mindestens zwei horizontale Zungen (7B) aufweist, wenn sich der Schild (5) in der Montageposition am Fahrzeug (1) befindet, die so konfiguriert sind, dass sie als Halterung für die hintere Kante (17A) dienen Luftumlenkplatte (15) bei der Montage der Umlenkplatte (15) vor dem Eingriff der Befestigungsmittel (7C) mit der Platte (15), **dadurch gekennzeichnet, dass** die Befestigungsmittel (7C) Laschen (7C) sind, die sich vertikal nach unten erstrecken, wenn sich die Umlenkplatte (5) in der Montageposition auf dem Fahrzeug (1) befindet, und so konfiguriert sind, dass sie gegen die Luftumlenkplatte (15) geschwenkt und umgeklappt werden können.

2. Heckstoßstangenschild (5) nach Anspruch 1, **dadurch gekennzeichnet, dass**, wenn sich das Schild (5) in der Fahrzeugmontageposition (1) befindet, die Zungen (7B) sich von der unteren Kante (7A) nach vorne erstrecken und die Zungen (7C) sich von der Kante (7A) nach unten vertikal erstrecken.

3. Kraftfahrzeug (1) mit:
- Heckstoßstangenschild (5) nach Anspruch 1 oder 2; und
- eine Luftleitplatte (15), die unter einem hinteren Lastboden (3) des Fahrzeugs (1) angeordnet ist, wobei eine hintere Kante (17A) an einer unteren Kante (7A) des hinteren Stoßfängers (5) befestigt ist.

4. Kraftfahrzeug (1) nach Anspruch 3, **dadurch gekennzeichnet, dass** sich jede der Zungen (7B) in einer quer verlaufenden Hauptrichtung längs des unteren Randes (7A) des hinteren Stoßfängers (5) erstreckt.

5. Kraftfahrzeug (1) nach einem der Ansprüche 3 und 4, **dadurch gekennzeichnet, dass** der hintere Stoßfängerschild (5) eine schalenförmige Wand ist, wobei die Wand einen unteren Abschnitt (7) umfasst, der sich horizontal erstreckt und den unteren Rand (7A) bildet, wobei jede der Zungen (7B) koplanar mit dem unteren Abschnitt (7) ist.

6. Kraftfahrzeug (1) nach einem der Ansprüche 3 bis 5, **dadurch gekennzeichnet, dass** die Luftablenkplatte (15) eine schalenförmige Wand ist, wobei die Wand einen Hauptabschnitt (17), der die hintere Kante (17A) bildet, einen vorderen Abschnitt (19) in einer anderen Höhe als der Hauptabschnitt (17) und einen gekrümmten Zwischenabschnitt (21), der den Hauptabschnitt (17) und den vorderen Abschnitt (19) verbindet, umfasst.

7. Kraftfahrzeug (1) nach Anspruch 6, **dadurch gekennzeichnet, dass** der vordere Abschnitt (19) der Wand der Luftleitplatte (15) an dem hinteren Lastboden (3) befestigt ist.

8. Kraftfahrzeug (1) nach einem der Ansprüche 6 und 7, **dadurch gekennzeichnet, dass** der vordere Abschnitt (19) der Wand der Luftablenkplatte (15) mit Befestigungsmitteln (19A) versehen ist, die eine vorläufige Befestigung beim Eingriff der Mittel (19A) mit entsprechenden Mitteln auf dem hinteren Lastboden (3) gewährleisten können.

9. Verfahren zur Montage einer Luftleitplatte (15) unter einem hinteren Lastboden (3) des Fahrzeugs (1), mit den folgenden Schritten:
(a) Anbau eines hinteren Stoßfängers (5);
(b) Anbringen der Luftleitplatte (15) unter der hinteren Ladefläche (3) und
(c) Befestigung der Platte (15) am Boden (3) und am Schild (5);
**dadurch gekennzeichnet, dass**
die hintere Stoßstange (5) ist nach einem der Ansprüche 1 oder 2; und
Schritt (b) umfasst das Eingreifen einer hinteren Kante (17A) der Luftleitplatte (15) mit den Zungen (7B) der Abschirmung (5), gefolgt von einer provisorischen Befestigung des vorderen Abschnitts (19) der Platte (15) am hinteren Lastboden (3).

## Claims

1. Rear bumper shield (5) for a motor vehicle (1), comprising a shell-shaped wall, said wall having a lower edge (7A) with means for fixing (7C) to a rear edge (17A) of an air deflector panel (15) intended to be arranged under a rear load floor (3) of the vehicle (1); the wall has, at the lower edge (7A), at least two horizontal tongues (7B), when the shield (5) is in the position for mounting on the vehicle (1), configured to serve as support for the rear edge (17A) of the disengaged panel air deflector (15) during the mounting of said deflector (15), before engagement of the fixing means (7C) with said panel (15), **characterized in that** the fixing means (7C) are tabs (7C) extending vertically downwards when said shield (5) is in the position for mounting on a vehicle (1), and configured to be pivoted and folded down against the air deflector panel (15).

2. Rear bumper shield (5) according to claim 1, **characterized in that**, when the shield (5) is in the position for mounting on a vehicle (1), the tongues (7B) extend forwards from the lower edge (7A) and the tabs (7C) extend vertically downwards from the said edge (7A).

3. Motor vehicle (1) comprising:
- rear bumper shield (5) according to claim 1 or 2; and
- an air deflector panel (15) arranged under a rear load floor (3) of the vehicle (1), with a rear edge (17A) attached to a lower edge (7A) of the rear bumper shield (5).

4. Motor vehicle (1) according to claim 3, **characterized in that** each of the tongues (7B) extends in a main transverse direction along the lower edge (7A) of the rear bumper shield (5).

5. Motor vehicle (1) according to one of claims 3 and 4, **characterized in that** the rear bumper shield (5) is a shell-shaped wall, the said wall comprising a lower portion (7) extending horizontally and forming the lower edge (7A), each of the tongues (7B) being coplanar with the said lower portion (7).

6. Motor vehicle (1) according to one of claims 3 to 5, **characterized in that** the air deflector panel (15) is a shell-shaped wall, the said wall comprising a main portion (17) forming the rear edge (17A), a front portion (19) at a height different from the main portion (17), and a curved intermediate portion (21) connecting the main (17) and front (19) portions.

7. Motor vehicle (1) according to claim 6, **characterized in that** the front portion (19) of the wall of the air deflector panel (15) is fixed against the rear load floor (3).

8. Motor vehicle (1) according to one of claims 6 and 7, **characterized in that** the front portion (19) of the wall of the air deflector panel (15) is provided with fixing means (19A) capable of ensuring temporary fixing when said means (19A) engage with corresponding means on the rear load floor (3).

9. Method for mounting an air deflector panel (15) under a rear load floor (3) of the vehicle (1), comprising the following steps:
(a) mounting a rear bumper shield (5);
(b) placing the air deflector panel (15) under the rear load floor (3); and
(c) fixing said panel (15) to said floor (3) and to said shield (5);
**characterized by**
the rear bumper shield (5) is according to either of claims 1 or 2; and
step (b) comprises engaging a rear edge (17A) of the air deflector panel (15) with the tongues (7B) of said shield (5), followed by a temporary fixing of the front portion (19) of said panel (15) to the rear load floor (3).
